# EUROPÄISCHE PATENTANMELDUNG

(11) **EP 4 417 555 A1**
(43) Veröffentlichungstag der Anmeldung: **21.08.2024**
(21) Anmeldenummer: 24154588.8
(22) Anmeldetag: 30.01.2024
(51) Int. Cl.: B65G 53/24, B07B 4/08, B65G 53/42, B65G 15/42, B65G 29/00

(54) **VORRICHTUNG ZUM FÖRDERN VON SCHÜTTFÄHIGEM MATERIAL UND VERFAHREN**

(30) Priorität: 03.02.2023 DE 102023102726
(71) Anmelder: IMA Schelling Deutschland GmbH, 32312 Lübbecke (DE)
(72) Erfinder: Altehoff, Bernd, 49324 Melle (DE)
(74) Vertreter: Schober, Mirko

(57) **Zusammenfassung**

Die Vorrichtung zum Fördern von schüttfähigem Material (3), insbesondere von Dübeln aus Holz oder Kunststoff, weist eine Ablagevorrichtung (4) mit wenigstens einem Ablagebereich zur Ablage des schüttfähigen Materials (3), eine Zuführvorrichtung (5), die das schüttfähige Material (3) der Ablagevorrichtung (4) so zuführt, dass es in den wenigstens einen Ablagebereich (I-IV) gelangt und eine Saugfördervorrichtung (2) auf, die in dem wenigstens einen Ablagebereich (I-IV) befindliches schüttfähiges Material ansaugt und transportiert. Die Ablagevorrichtung (4) ist durch eine gesteuerte Bewegung relativ zur Zuführvorrichtung (5) und/oder relativ zur Saugfördervorrichtung (2) verlagerbar.

## Beschreibung

Die Erfindung betrifft eine Vorrichtung zum Fördern von schüttfähigem Material und ein Verfahren, bei dem eine solche Vorrichtung eingesetzt wird.

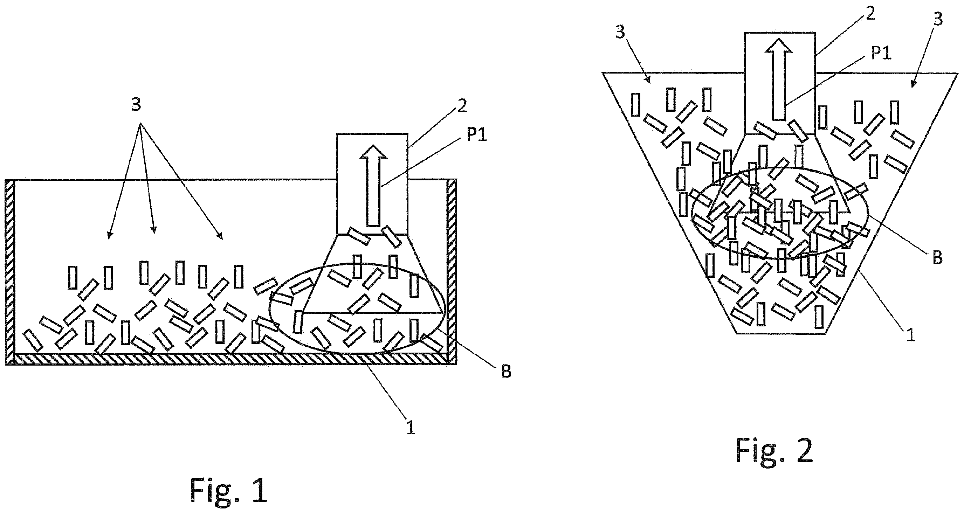

Entsprechende Vorrichtungen, mit denen schüttfähiges Material wie beispielsweise Dübel aus Holz oder Kunststoff in einer Anlage, insbesondere eine Holzverarbeitungsanlage, gefördert wird, sind bekannt. Beispiele sind in den Figuren 1 und 2 dargestellt. Zumeist gibt es einen Vorratsbehälter 1, in welchem das schüttfähige Material 3 bevorratet wird. Über eine Saugfördervorrichtung 2 wird das schüttfähige Material 3 in einer Richtung P1 angesaugt. In dem Bereich B kommt es dabei häufig zu einer starken Ansammlung und Verdichtung des schüttfähigen Materials 3. Dadurch kann der Ansaugprozess blockiert und im schlimmsten Fall die Förderung des schüttfähigen Materials in Richtung P1 ganz verhindert werden.

Der Erfindung liegt daher die Aufgabe zugrunde, eine Vorrichtung zum Fördern von schüttfähigem Material bereitzustellen, mit der sich die geschilderten Nachteile vermeiden lassen.

Gelöst wird diese Aufgabe durch eine Vorrichtung zum Fördern von schüttfähigem Material, insbesondere von Dübeln aus Holz oder Kunststoff, mit den Merkmalen des Anspruchs 1. Bevorzugte Ausführungsformen der erfindungsgemäßen Vorrichtung sind Gegenstand der Unteransprüche.

Der vorliegenden Erfindung liegt die Überlegung zugrunde, anstatt das schüttfähige Material mittels der Saugfördervorrichtung direkt aus einem Vorratsbehälter abzusaugen, das Material zunächst auf eine Ablagevorrichtung zu verbringen, auf der das von der Saugfördervorrichtung anzusaugende schüttfähige Material verteilt wird. Auf diese Weise kann sichergestellt werden, dass in einem bestimmten Bereich nicht zu viel schüttfähiges Material vorhanden ist, sodass es im Bereich der Saugfördervorrichtung nicht zu Verstopfungen kommt.

Eine erfindungsgemäße Vorrichtung zum Fördern von schüttfähigem Material, insbesondere von Dübeln aus Holz oder Kunststoff, weist beispielsweise eine Ablagevorrichtung mit wenigstens einem Ablagebereich zur Ablage des schüttfähigen Materials, eine Zuführvorrichtung, die das schüttfähige Material der Ablagevorrichtung so zuführt, dass es in den wenigstens einen Ablagebereich gelangt, und eine Saugfördervorrichtung auf, die in dem wenigstens einen Ablagebereich befindliches schüttfähiges Material ansaugt und transportiert. Die Ablagevorrichtung ist erfindungsgemäß durch eine gesteuerte Bewegung relativ zur Zuführvorrichtung und/oder relativ zur Saugfördervorrichtung verlagerbar.

Durch die Relativbewegung zwischen Ablagevorrichtung und Saugfördervorrichtung bzw. Zuführvorrichtung kann schüttfähiges Material auf der Ablagevorrichtung mittels der Zuführvorrichtung in einem ersten Ablagebereich abgelegt werden. Anschließend gelangt dieser erste Ablagebereich durch die genannte Relativbewegung in den Bereich, in welchem die Saugfördervorrichtung wirksam ist und das auf dem ersten Ablagebereich abgelegte Material ansaugen kann. Vorteilhafterweise steht dann während des Ansauges bereits ein weiterer Ablagebereich an der Ablagevorrichtung zur Verfügung, der mittels der Zuführvorrichtung parallel mit schüttfähigem Material beschickt werden kann. So kann ein annähernd kontinuierlicher Prozess geschaffen werden.

Die beschriebene, durch eine Maschinensteuerung gesteuerte relative Bewegung kann auf unterschiedliche Weise realisiert werden. Nach einer bevorzugten Ausführungsform ist vorgesehen, dass die gesteuerte Bewegung eine Drehbewegung ist. Beispielsweise kann dies dadurch realisiert werden, dass die Ablagevorrichtung eine Drehscheibe umfasst. Eine weitere Möglichkeit ist, die Ablagevorrichtung so auszubilden, dass die durch die Maschinensteuerung gesteuerte relative Bewegung eine lineare Bewegung ist. Letzteres lässt sich beispielsweise dadurch realisieren, dass die Ablagevorrichtung ein Förderband umfasst. Natürlich kann die Ablagevorrichtung selbst auch ortsfest angeordnet und die Saugfördervorrichtung oder/und die Zuführvorrichtung drehend oder/und linear durch eine gesteuerte Bewegung bewegbar sein.

Wie oben beschrieben, kann der gesamte Prozess ökonomischer gestaltet werden, wenn die Ablagevorrichtung eine Mehrzahl Ablagebereiche umfasst. Solche können dann teilweise durch eine Zuführvorrichtung beschickt und teilweise mittels der Saugfördervorrichtung geleert werden. Nach einer bevorzugten Ausführungsform kann vorgesehen sein, dass zwischen wenigstens zwei, bevorzugt allen, benachbarten Ablagebereichen ein Trennelement angeordnet ist. Hierdurch wird zum einen erreicht, dass beim Beschicken eines Ablagebereiches mit schüttfähigem Material durch die Zuführvorrichtung schüttfähiges Material nicht auf einen benachbarten Ablagebereich gelangt. Durch ein Trennelement kann allerdings auch eine unerwünschte Aufhäufung des schüttfähigen Materials vermieden werden, sodass der Haufen aus schüttfähigem Material auf dem Ablagebereich nicht zu Verstopfungen führen kann, wenn dieser in den Wirkbereich der Saugfördervorrichtung gelangt. Beispielsweise kann hierzu das Trennelement zum Boden des Ablagebereichs hin voneinander divergierende Gleitflächen aufweisen. Die Trennelemente können so als Abstreifer ausgebildet sein, sodass bei Relativbewegung zwischen der Zuführvorrichtung bzw. der Saugfördervorrichtung das schüttfähige Material auf der Ablagevorrichtung in dem betreffenden Ablagebereich eine bestimmte Schichthöhe nicht übersteigt. Dadurch wird sichergestellt, dass der Zwischenraum zwischen der Saugfördervorrichtung und dem auf der Ablagevorrichtung in dem betreffenden Ablagebereich angehäuften schüttfähigen Material einen vorgegebenen Mindestabstand nicht unterschreitet. Verstopfungen werden auf diese Weise wirksam vermieden.

Um die Saugförderung des schüttfähigen Materials noch zu verbessern, kann vorgesehen sein, dass der Boden eines oder jedes Ablagebereiches luftdurchlässig ausgebildet ist. Hierdurch ist eine Durchströmung der Ablagevorrichtung möglich und der Ansaugvorgang wird verbessert.

Die Erfindung betrifft ferner eine Vorrichtung zum Fördern von schüttfähigem Material, insbesondere von Dübeln aus Holz oder Kunststoff, die bevorzugt wie oben beschrieben ausgebildet ist, und wenigstens eine Saugfördervorrichtung aufweist, die schüttfähiges Material ansaugt und transportiert, und wenigstens ein Förderrohr und eine sich daran anschließende Rohrverzweigung umfasst. An diese schließen sich stromabwärts wenigstens eine erste und eine zweite Rohrleitung an. Die Rohrverzweigung weist wenigstens ein erstes und ein zweites Anströmmittel auf. Die Anströmmittel sind dabei dazu ausgelegt, einen durch das Förderrohr in die Verzweigung gelangenden Strom aus schüttfähigem Material anzuströmen.

Mit dieser Einrichtung kann der Strom aus schüttfähigem Material auf unterschiedliche Weise gefördert werden. Einmal lässt sich der Strom verstärken, indem die Anströmmittel zusätzliche Förderleistung bereitstellen. Auf der anderen Seite lässt sich durch die Anströmmittel selektiv der aus dem Förderrohr kommende Strom ausschließlich in die erste oder die zweite Rohrleitung weiter fördern.

Es kann also vorgesehen sein, dass das erste Anströmmittel so angeordnet ist, dass von ihm angeströmtes schüttfähiges Material in Richtung der ersten Rohrleitung geleitet wird. Alternativ oder ergänzend hierzu kann das zweite Anströmmittel so angeordnet sein, dass von ihm angeströmtes schüttfähiges Material in Richtung der zweiten Rohrleitung geleitet wird.

Zur weiteren Verstärkung des Stroms aus schüttfähigem Material kann stromabwärts hinter der Verzweigung noch wenigstens eine weitere Saugfördervorrichtung angeordnet sein.

Die Erfindung betrifft außerdem ein Verfahren, bei welchem die oben beschriebene Vorrichtung zum Fördern von schüttfähigem Material eingesetzt wird. Insbesondere eignet sich dieses Verfahren zum Fördern von Dübeln aus Holz oder Kunststoff. Das Verfahren ist gekennzeichnet durch folgende Schritte:
i) Bereitstellen von Dübeln,
ii) Bereitstellen einer oben beschriebenen Vorrichtung,
iii) Zuführen der Dübel zur Ablagevorrichtung derart, dass die Dübel in einen Ablagebereich der Ablagevorrichtung gelangen,
iv) Verlagern der Ablagevorrichtung durch gesteuertes Bewegen, bevorzugt rotierendes oder lineares Bewegen, relativ zur Zuführvorrichtung und/oder relativ zur Saugfördervorrichtung,
v) Ansaugen und Transportieren von in dem oder einem weiteren Ablagebereich befindlichen Dübeln mittels der Saugfördervorrichtung.

Die Verfahrensschritte können in der oben angegebenen Reihenfolge erfolgen, es ist aber auch möglich, dass einzelne Schritte mehrfach ausgeführt oder auch in vertauschter Reihenfolge ausgeführt werden.

Beispielsweise kann die relative Verlagerung in Schritt iv) so erfolgen, dass die Dübel einem bestimmten Ablagebereich zugeführt werden. Dieser Ablagebereich kann von einer Maschinensteuerung vorgegeben werden.

Insbesondere, wenn eine Mehrzahl Ablagebereiche vorgesehen ist, kann es sich empfehlen, dass der Schritt iv) vor dem Schritt iii) ausgeführt wird. Ein bereits mit Dübeln versehener Ablagebereich kann so relativ zur Zuführvorrichtung bewegt werden, sodass ein freier Ablagebereich in den Wirkbereich der Zuführvorrichtung gelangt. Bevorzugt ist die Ablagevorrichtung beweglich ausgebildet, es ist aber genauso gut möglich, dass die Ablagevorrichtung ortsfest und die Zuführvorrichtung bzw. die Saugfördervorrichtung relativ zur Ablagevorrichtung beweglich sind. Auch ist es möglich, dass sowohl die Ablagevorrichtung als auch Zuführvorrichtung und Saugfördervorrichtung beweglich ausgebildet sind.

Bevorzugt ist vorgesehen, dass gleichzeitig Dübel einem Ablagebereich gemäß Schritt iii) zugeführt werden, während zuvor einem anderen Ablagebereich zugeführte Dübel gemäß Schritt v) abgesaugt und transportiert werden. Dies ermöglicht eine quasi kontinuierliche Zuführung und Absaugung von Dübeln, sodass ein hoher Durchsatz an Material ermöglicht wird.

Die Erfindung wird nachfolgend anhand der Figuren 1 bis 9 näher erläutert.
Die Figuren 1 und 2 zeigen typische Vorrichtungen zum Fördern von schüttfähigem Material nach dem Stand der Technik. Insoweit wird auf die obigen Ausführungen verwiesen.
Figur 3 zeigt eine Schnittansicht durch eine erste Ausführungsform der erfindungsgemäßen Vorrichtung.
Figur 4 zeigt eine Draufsicht auf ein Detail der in Figur 3 dargestellten Vorrichtung.
Figur 5 zeigt eine Schnittansicht durch eine zweite Ausführungsform der erfindungsgemäßen Vorrichtung.
Figur 6 zeigt eine Querschnittansicht durch die in Figur 5 dargestellte Vorrichtung entlang der Schnittlinie A-A.
Figur 7 zeigt eine erfindungsgemäße Vorrichtung mit Anströmmitteln in einem ersten Betriebsmodus.
Figur 8 zeigt eine erfindungsgemäße Vorrichtung mit Anströmmitteln in einem zweiten Betriebsmodus.
Figur 9 zeigt eine erfindungsgemäße Vorrichtung mit Anströmmitteln in einem dritten Betriebsmodus.

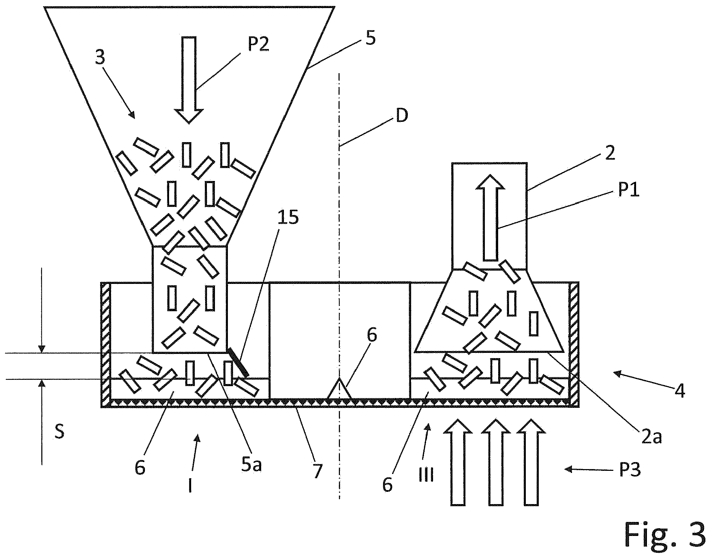

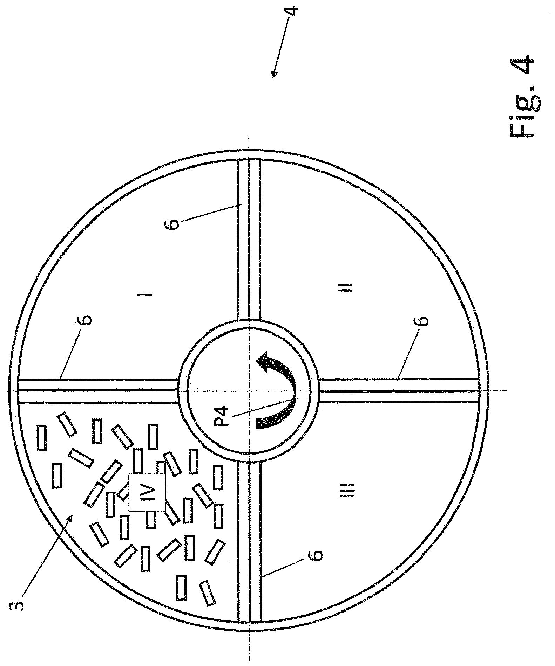

In den Figuren 3 und 4 ist eine erste Ausführungsform der erfindungsgemäßen Vorrichtung zum Fördern von schüttfähigem Material 3 dargestellt.

Mit einer Zuführvorrichtung 5, die bevorzugt als trichterförmige Einrichtung ausgebildet ist, wird in einer Richtung P2 schüttfähiges Material 3, bevorzugt Dübel aus Holz oder Kunststoff, einer Ablagevorrichtung 4 zugeführt. Die Ablagevorrichtung 4, die bevorzugt in Gestalt eines zylinderförmigen Bauteils, beispielsweise korbförmig mit umlaufender Seitenwand ausgebildet ist, weist einen Boden 7 sowie Ablagebereiche I-IV auf. Theoretisch funktioniert die Erfindung mit einem einzigen Ablagebereich. In Fig. 3 sind lediglich zwei Ablagebereiche I und III in der dortigen Schnittdarstellung dargestellt. Ferner sind am Boden 7 der Ablagevorrichtung 4 bevorzugt im Querschnitt zum Boden hin divergierende, bevorzugt dreieckige, Trennelemente 6 angeordnet, die die einzelnen Ablagebereiche I-IV voneinander trennen. Wie man in Fig. 3 erkennt, führt die Zufuhrvorrichtung 5 in Richtung des Pfeils P2 schüttfähiges Material 3 zu. Im Mündungsbereich 5a der Zuführvorrichtung 5 gelangt das schüttfähige Material 3 auf einen Ablagebereich I. Dort häuft sich das schüttfähige Material 3 zu einem Haufen auf, dessen Höhe letztlich durch den Abstand S zwischen der Mündung 5a der Zuführvorrichtung 5 und der in der Zeichnung oberen, entfernt vom Boden 7 angeordneten, Kante eines Trennelements 6 festgelegt wird.

Weiter umfasst die erfindungsgemäße Vorrichtung eine Saugfördervorrichtung 2, die das schüttfähige Material 3 in Richtung des Pfeils P1 vom Boden der Ablagevorrichtung 4 aufnimmt und weiter fördert. Dazu weist die Saugfördervorrichtung eine hier nicht dargestellte Saugvorrichtung wie beispielsweise ein Gebläse oder dergleichen auf. Bevorzugt ist der Boden 7 der Ablagevorrichtung 4 luftdurchlässig, sodass beim Absaugen von schüttfähigem Material 3 vom Boden 7 der Ablagevorrichtung 4, im gezeigten Beispiel vom Ablagebereich III, zusätzlich Luft in Richtung des Pfeils P3 von unterhalb der Ablagevorrichtung 4 angesaugt werden kann.

In der dargestellten Ausführungsform der Fig. 3 und 4 ist die Ablagevorrichtung 4 um eine Achse D drehbar gelagert. Wird also schüttfähiges Material 3 über die Zuführvorrichtung 5 auf den Ablagebereich I verbracht, kann die Ablagevorrichtung 4 dann um die Drehachse D in Richtung des Pfeils P4 (vgl. Fig. 4) gedreht werden, sodass sich dann der Ablagebereich I unterhalb der Saugfördervorrichtung 2 befindet, also die Position des in Fig. 3 dargestellten Ablagebereichs III einnimmt. Die Trennelemente 6, die letztlich die Grenzen der einzelnen Ablagebereiche I-IV darstellen, sorgen dafür, dass der zwischen ihnen angeordnete Haufen aus schüttfähigem Material 3 auf einem definierten Ablagebereich I-IV verbleibt. Gleichzeitig dienen die Trennelemente 6 in Kombination mit anderen Bauteilen der erfindungsgemäßen Vorrichtung, beispielsweise dem Mündungsbereich 5a der Zuführvorrichtung 5 oder dem unteren Bereich 2a der Saugfördervorrichtung 2 als Abstreifer. Denkbar ist auch ein separater Abstreifer 15, z. B. in Gestalt eines Rakels oder dergleichen, der etwa an der Zuführvorrichtung 5 oder an anderer Stelle der erfindungsgemäßen Vorrichtung angebracht werden kann, und dafür sorgt, dass schüttfähiges Material 3, welches höher aufgehäuft ist als die obere Kante eines Trennelements 6, von diesem Abstreifer 15 zurückgehalten wird. Auf diese Weise wird sichergestellt, dass die maximale Füllhöhe, bis zu der schüttfähiges Material auf der Ablagevorrichtung 4 zu liegen kommt, durch die obere Kante eines Trennelements 6 festgelegt wird. So kann ein erforderlicher Abstand S zwischen der unteren Seite

2a der Saugfördervorrichtung 2 beibehalten werden, wodurch sichergestellt ist, dass es im Ansaugbereich der Saugfördervorrichtung 2 nicht zu Verstopfungen kommt.

Es versteht sich von selbst, dass eine erfindungsgemäße Vorrichtung auch eine Mehrzahl Zuführvorrichtungen 5 und eine Mehrzahl Saugfördervorrichtungen 2 aufweisen kann.

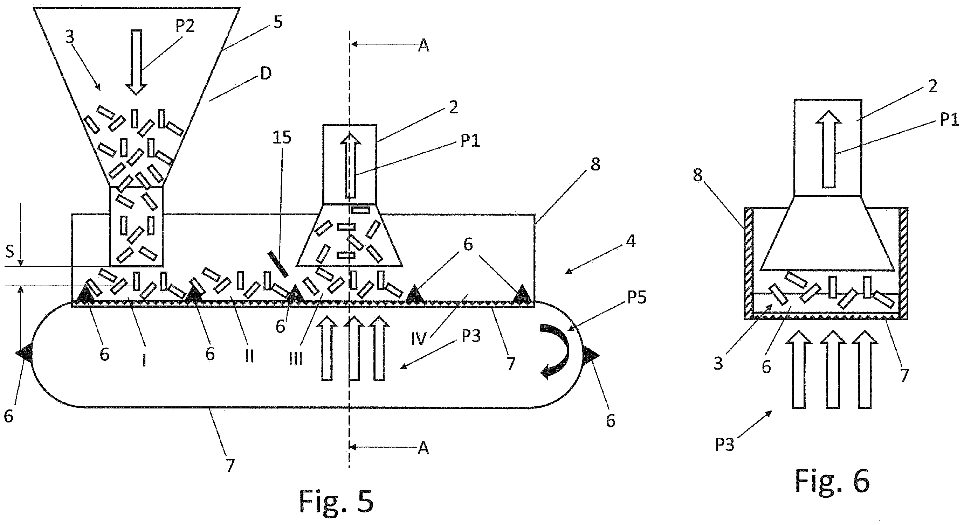

Dies gilt auch für die nachfolgende Ausführungsform gemäß den Fig. 5 und 6 entsprechend. Zur Vermeidung von Wiederholungen wird hier lediglich auf die Unterschiede eingegangen, im Übrigen wird auf die obigen Ausführungsformen verwiesen.

Im Unterschied zu der oben beschriebenen Ausführungsform ist die Ablagevorrichtung 4 hier nicht in Gestalt einer Drehscheibe oder eines Drehkorbes ausgebildet, sondern in Gestalt eines in linearer Richtung beweglichen, umlaufenden Förderbandes, wie insbesondere in Fig. 5 zu sehen ist. Die Förderrichtung P5 ist durch den entsprechenden Pfeil dargestellt. Wieder finden sich hier Trennelemente 6, die einzelne Ablagebereiche I-IV voneinander trennen. Auch hier ist bevorzugt, dass der Boden 7 der Ablagevorrichtung 4 luftdurchlässig ist, sodass das Ansaugen von schüttfähigem Material 3 erleichtert wird. Auch hier kann wieder ein Abstreifer 15 an irgendeiner Stelle der Vorrichtung vorgesehen sein, um die maximale Höhe des zwischen den Trennelementen 6 befindlichen Haufens aus schüttfähigem Material 3 zu begrenzen.

In Fig. 6 ist eine Schnittansicht entlang der Linie A-A dargestellt, aus der man erkennen kann, dass das hier durch den Boden 7 angedeutete Förderband seitlich von Seitenwänden 8 begrenzt ist.

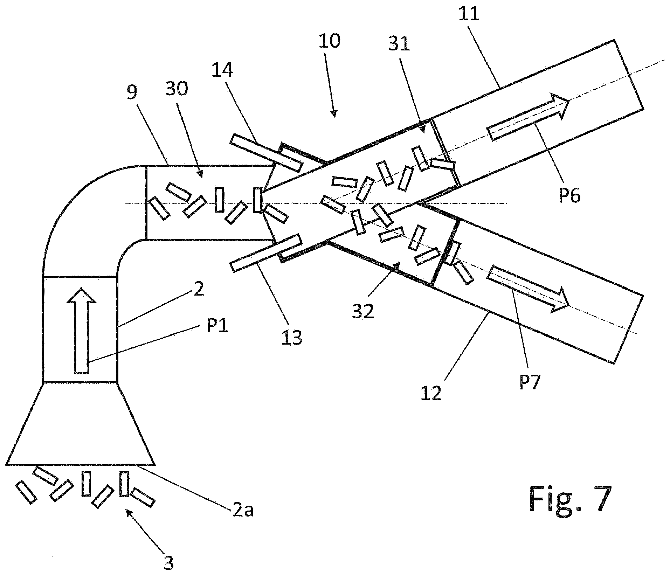

Auf diese Weise lassen sich Verstopfungen beim Ansaugen wirksam vermeiden. Für den Weitertransport des schüttfähigen Materials 3 ist weiter erfindungsgemäß eine Fördervorrichtung geeignet, wie sie in den Fig. 7 bis 9 dargestellt ist.

Das durch die Ansaugöffnung 2a von der Saugfördervorrichtung 2 in Richtung P1 eingesogene schüttfähige Material 3 gelangt in ein Förderrohr 9 und bildet einen Materialstrom 30. Die Saugfördervorrichtung 2 weist in dieser Ausführungsform weiter eine sich an das Förderrohr 9 anschließende Rohrverzweigung 10 auf, die bevorzugt in Gestalt einer Weiche ausgebildet ist. Stromabwärts gehen von dieser Rohrverzweigung 10 wenigstens zwei Rohrleitungen 11, 12 ab, in welche der Strom 30 verzweigt werden kann. Eine Möglichkeit ist, den Strom 30 über die Rohrverzweigung 10 in die Teilströme 31 und 32 aufzuteilen, die dann in der Rohrleitung 11 in Richtung P6 und in der Rohrleitung 12 in Richtung P7 weiter transportiert werden können.

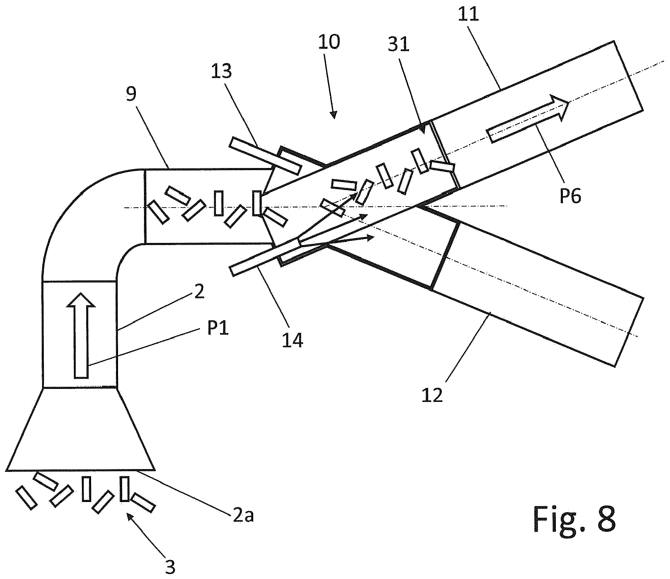

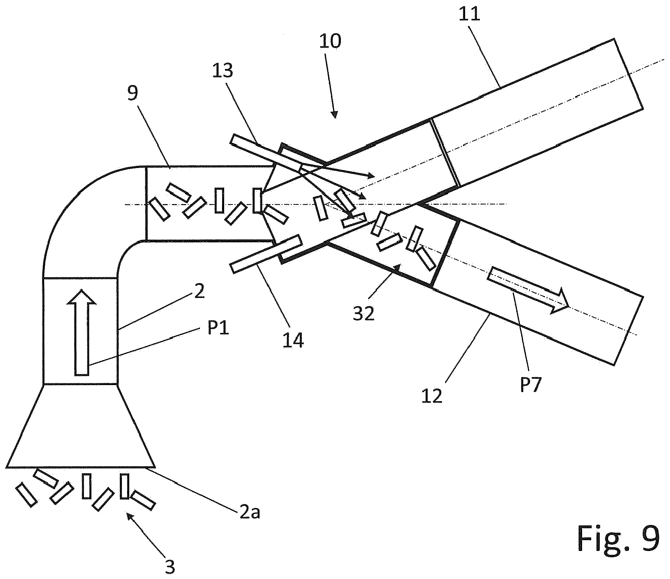

Bei der vorliegenden Erfindung sind zusätzlich Anströmmittel 13 und 14 im Bereich der Rohrverzweigung 10 angeordnet. Das Anströmmittel 13, bei dem es sich wie auch beim Anströmmittel 14 bevorzugt um ein Gebläse oder eine Düse handeln kann, kann das schüttfähige Material aus dem Strom 30 anblasen. Wird also das Anströmmittel 13 betätigt, wird der Strom 30 effektiv in die Rohrleitung 11 in Richtung P6 als Strom 31 umgeleitet. Diese Situation ist in Fig. 8 dargestellt. Entsprechendes gilt für das Anströmmittel 14, welches so angeordnet ist, dass der Strom 30 in die Rohrleitung 12 in Richtung P7 als Strom 32 umgeleitet wird. Diese Situation ist in Fig. 9 dargestellt. Natürlich ist es auch möglich, beide Anströmmittel 13, 14 zu betätigen, um in der Rohrverzweigung zusätzlichen Druck zu erzeugen, um die dann verzweigten Teilströme 31 und 32 zusätzlich zu beschleunigen. Ebenso ist es möglich, stromabwärts in den Rohrleitungen 11, 12 oder in dem Förderrohr 9 eine weitere Saugfördervorrichtung vorzusehen, um denselben Effekt zu erreichen.

## Patentansprüche

1. Vorrichtung zum Fördern von schüttfähigem Material (3), insbesondere von Dübeln aus Holz oder Kunststoff, aufweisend:
eine Ablagevorrichtung (4) mit wenigstens einem Ablagebereich zur Ablage des schüttfähigen Materials (3) eine Zuführvorrichtung (5), die das schüttfähige Material (3) der Ablagevorrichtung (4) so zuführt, dass es in den wenigstens einen Ablagebereich (I-IV) gelangt,
eine Saugfördervorrichtung (2), die in dem wenigstens einen Ablagebereich (I-IV) befindliches schüttfähiges Material ansaugt und transportiert,
wobei die Ablagevorrichtung (4) durch eine gesteuerte Bewegung relativ zur Zuführvorrichtung (5) und/oder relativ zur Saugfördervorrichtung (2) verlagerbar ist.

2. Vorrichtung nach Anspruch 1,
**dadurch gekennzeichnet, dass** die gesteuerte Bewegung eine Drehbewegung oder eine lineare Bewegung ist.

3. Vorrichtung nach einem der vorigen Ansprüche,
**dadurch gekennzeichnet,**
**dass** die Ablagevorrichtung (4) eine Drehscheibe oder ein Förderband umfasst.

4. Vorrichtung nach einem der vorigen Ansprüche,
**dadurch gekennzeichnet,**
**dass** sie eine Mehrzahl Ablagebereiche (I-IV) umfasst.

5. Vorrichtung nach Anspruch 4,
**dadurch gekennzeichnet,**
**dass** zwischen wenigstens zwei, bevorzugt allen, benachbarten Ablagebereichen (I-IV) ein Trennelement (6) angeordnet ist.

6. Vorrichtung nach Anspruch 5,
**dadurch gekennzeichnet,**
**dass** das Trennelement (6) zum Boden (7) des Ablagebereichs (I-IV) hin voneinander divergierende Gleitflächen aufweist.

7. Vorrichtung nach einem der vorigen Ansprüche,
**dadurch gekennzeichnet,**
**dass** der Boden (7) eines oder jedes Ablagebereiches (I-IV) luftdurchlässig ausgebildet ist.

8. Vorrichtung zum Fördern von schüttfähigem Material (3), insbesondere von Dübeln aus Holz oder Kunststoff, bevorzugt nach einem der vorigen Ansprüche, aufweisend wenigstens eine Saugfördervorrichtung (2), die schüttfähiges Material (3) ansaugt und transportiert, und wenigstens ein Förderrohr (9) und eine sich daran anschließende Rohrverzweigung (10) umfasst, an die sich stromabwärts wenigstens eine erste und eine zweite Rohrleitung (11, 12) anschließen, wobei die Rohrverzweigung (10) wenigstens ein erstes und ein zweites Anströmmittel (13, 14) aufweist, wobei die Anströmmittel (13, 14) dazu ausgelegt sind, einen durch das Förderrohr (9) in die Verzweigung (10) gelangenden Strom (30) aus schüttfähigem Material (3) anzuströmen.

9. Vorrichtung nach Anspruch 8,
**dadurch gekennzeichnet,**
**dass** das erste Anströmmittel (13) so angeordnet ist, dass von ihm angeströmtes schüttfähiges Material (3) in Richtung der ersten Rohrleitung (11) geleitet wird und/ oder dass das zweite Anströmmittel (14) so angeordnet ist, dass von ihm angeströmtes schüttfähiges Material (3) in Richtung der zweiten Rohrleitung (12) geleitet wird.

10. Vorrichtung nach Anspruch 8 oder 9,
**dadurch gekennzeichnet,**
**dass** wenigstens eine weitere Saugfördervorrichtung (2) stromabwärts hinter der Verzweigung (10) angeordnet ist.

11. Verfahren zum Fördern von Dübeln aus Holz oder Kunststoff, **gekennzeichnet durch**:
i) Bereitstellen von Dübeln (3),
ii) Bereitstellen einer Vorrichtung nach einem der vorigen Ansprüche,
iii) Zuführen der Dübel (3) zur Ablagevorrichtung (4) derart, dass die Dübel (3) in einen Ablagebereich (I-IV) der Ablagevorrichtung (4) gelangen,
iv) Verlagern der Ablagevorrichtung (4) **durch** gesteuertes Bewegen, bevorzugt rotierendes oder lineares Bewegen, relativ zur Zuführvorrichtung (5) und/oder relativ zur Saugfördervorrichtung (2),
v) Ansaugen und Transportieren von in dem oder einem weiteren Ablagebereich (I-IV) befindlichen Dübeln (3) mittels der Saugfördervorrichtung (2).

12. Verfahren nach Anspruch 11,
**dadurch gekennzeichnet,**
**dass** die relative Verlagerung in Schritt iv) so erfolgt, dass die die Dübel (3) einem bestimmten Ablagebereich (I-IV) zugeführt werden.

13. Verfahren nach einem der Ansprüche 11 und 12,
**dadurch gekennzeichnet,**
**dass** der Schritt iv) vor dem Schritt iii) ausgeführt wird.

14. Verfahren nach einem der Ansprüche 11 bis 13,
**dadurch gekennzeichnet,**
**dass** gleichzeitig Dübel (3) einem Ablagebereich gemäß Schritt iii) zugeführt werden, während zuvor einem anderen Ablagebereich zugeführte Dübel (3) gemäß Schritt v) abgesaugt und transportiert werden.
